(19) Europäisches Patentamt
European Patent Office
Office européen des brevets

(11) **EP 2 926 451 B1**

(12) **FASCICULE DE BREVET EUROPEEN**

(45) Date de publication et mention
de la délivrance du brevet:
**17.10.2018 Bulletin 2018/42**

(21) Numéro de dépôt: **13826859.4**

(22) Date de dépôt: **22.11.2013**

(51) Int Cl.:
*F02D 29/06* (2006.01)       *F02D 41/30* (2006.01)
*H02P 9/04* (2006.01)

(86) Numéro de dépôt international:
**PCT/IB2013/060338**

(87) Numéro de publication internationale:
**WO 2014/083487 (05.06.2014 Gazette 2014/23)**

(54) **PROCÉDÉ DE RÉGULATION D'UN GROUPE ÉLECTROGÈNE**

VERFAHREN ZUR REGELUNG EINES GENERATORSATZES

METHOD FOR REGULATING A GENERATOR SET

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.11.2012 FR 1261308**

(43) Date de publication de la demande:
**07.10.2015 Bulletin 2015/41**

(73) Titulaire: **Moteurs Leroy-Somer
16915 Angouleme (FR)**

(72) Inventeurs:
• **ANDREJAK, Jean-Marie
F-16710 Saint Yrieix (FR)**
• **MOSER, Samuel
F-16160 Gond-Pontouvre (FR)**
• **BETGE, Patrice
F-16340 L'Isle d'Espagnac (FR)**

(74) Mandataire: **Nony
11 rue Saint-Georges
75009 Paris (FR)**

(56) Documents cités:
**EP-A1- 1 938 447       EP-A1- 2 083 498
EP-A1- 2 204 565       JP-A- 2002 106 394
US-A1- 2009 153 105**

EP 2 926 451 B1

## Description

La présente invention concerne la régulation des groupes électrogènes.

Un groupe électrogène est constitué par l'assemblage d'un moteur thermique et d'un alternateur. Afin de fournir une tension et une fréquence nominales, à la fois le moteur et l'alternateur sont équipés de moyens de régulation. Le moteur thermique est équipé d'un régulateur de vitesse électronique, intégré au système d'injection de carburant du moteur. La régulation de la vitesse du moteur repose entre autres sur la mesure de la vitesse de rotation de l'arbre du moteur, par exemple par un capteur comptant par unité de temps le nombre de dents d'une couronne dentée passant devant le capteur. Un calculateur d'injection du régulateur de vitesse détermine grâce au signal délivré par ce capteur le niveau d'injection de carburant de façon à maintenir la vitesse à une valeur prédéfinie, mais n'a pas une connaissance directe du niveau de charge qui est appliqué au moteur. Chaque variation de charge appliquée au moteur, que ce soit une augmentation ou une diminution, se traduit par une diminution ou une augmentation transitoire du régime moteur que le régulateur de vitesse tente de corriger par un niveau d'injection adéquat.

Dans bon nombre de groupes électrogènes connus, c'est ainsi seulement grâce à la connaissance de la vitesse et du niveau d'injection que le régulateur détermine le niveau de charge qui est appliqué au moteur.

Par ailleurs, le couple $C$ demandé au moteur thermique est directement proportionnel au courant $I$ en sortie de l'alternateur. En effet, la loi de puissance $P$ du moteur thermique est :

$$P = C.w,$$

où $w$ est la vitesse de rotation du moteur.

La loi de puissance $P$ de l'alternateur est :

$$P = U.I.cos(\varphi),$$

où $U$ est la tension de sortie de l'alternateur et $\varphi$ le déphasage entre le courant $I$ et la tension $U$.

Le moteur thermique et l'alternateur étant liés mécaniquement, on peut écrire, de façon simplifiée, que : $C.w = U.I.cos(\varphi)$.

Lors de l'application d'une forte charge active, $cos(\varphi)$ devient proche de 1, et la tension de l'alternateur chute. L'alternateur est équipé d'un régulateur de tension qui corrige rapidement cette chute de tension en augmentant le courant dans la roue polaire.

La variation de la charge se traduit également par une chute de vitesse, car le couple $C$ demandé au moteur thermique augmente. Le moteur étant incapable de répondre instantanément à cette demande, sa vitesse $w$ chute, car une partie du couple $C$ est puisée dans la réserve d'énergie cinétique en rotation.

La reprise de vitesse du moteur est essentiellement conditionnée par la rapidité de l'application d'une aide au moteur par le régulateur de tension.

L'invention s'intéresse plus particulièrement mais non exclusivement aux groupes équipés de moteurs à turbocompresseur.

Un inconvénient de ce type de moteur est la dégradation de ses performances si la turbocompression ne peut pas être lancée correctement. Or, une variation brutale de la charge est susceptible de ralentir trop fortement le moteur pour un fonctionnement correct de celui-ci. Lors du fonctionnement à vide, la pression d'admission d'air est proche de la pression atmosphérique mais dès que l'augmentation de la charge est appliquée au groupe électrogène, la vitesse du moteur chute à un tel point que, malgré la réaction du régulateur de vitesse sur le système d'injection, le flux de gaz d'échappement n'est pas suffisant pour lancer la ou les turbines des turbocompresseurs à leur régime de fonctionnement. Ces derniers sont alors incapables de faire augmenter la pression d'admission, nécessaire pour que le moteur soit capable d'accélérer et de retrouver sa vitesse nominale. Il existe donc un point limite qu'il faut éviter d'atteindre.

De façon connue, l'aide au moteur est appliquée lorsque le moteur thermique a déjà chuté en vitesse et que sa vitesse est descendue en dessous d'une certaine valeur.

Il est connu du brevet US 5 703 410 de contrôler le courant d'excitation d'un alternateur et l'injection de carburant à partir de la connaissance de la tension redressée en sortie de l'alternateur.

Il est également connu de la demande EP 1 938 447 de commander l'actionneur d'admission de carburant d'un groupe électrogène grâce à un dispositif de contrôle délivrant un signal de commande se substituant à un signal de sortie du régulateur de vitesse lorsqu'une variation de charge est détectée.

La demande US 2007/0228735 divulgue un système de production d'énergie dans lequel un dispositif de contrôle agit sur le générateur pour changer sa tension de sortie en réponse à une variation de la vitesse de rotation. Dans un exemple, le dispositif de contrôle agit directement sur un pont de redressement commandé (SCR) et son contrôle prévaut sur la commande effectuée par le régulateur de tension. Dans cette situation, le régulateur de tension ne peut plus jouer son rôle et part en saturation complète. Un inconvénient de ce système est que lors du retour au fonctionnement normal, un à-coup aura lieu tant que le régulateur de tension ne se sera pas recalé.

La demande DE 10 2004 017 087 décrit la régulation de l'injection de carburant dans un moteur au niveau du régulateur de vitesse, par la détection d'une modification de la charge. Cela implique de fabriquer un régulateur de vitesse spécifique.

La demande US 2010/0241283 divulgue un procédé de régulation modifiant le courant d'excitation en cas d'augmentation de la puissance. Le régulateur de vitesse coopère étroitement avec le régulateur de tension, ce qui implique une conception intégrée du régulateur de tension ou du régulateur de vitesse, et une conception appropriée du régulateur de vitesse. La demande EP2083498 divulgue un procédé de régulation de l'injection de carburant dans un moteur thermique d'un groupe électrogène . En cas d'application d'une charge, la tension redressée diminue et la sortie du contrôleur de tension, par l'intermédiaire du contrôleur de courant, demande une augmentation de courant pour maintenir la tension redressée constante. Dans le cas où le courant atteint une valeur maximum, le régulateur de vitesse provoque une augmentation de vitesse du moteur à combustion interne.

Il existe un besoin pour améliorer encore les performances des groupes électrogènes, notamment sans changer la conception des régulateurs de vitesse préexistants, afin de gérer les variations de la charge et faciliter l'utilisation de moteurs à turbocompresseur.

L'invention vise à répondre au moins en partie à ce besoin et elle y parvient, selon l'un de ses aspects, grâce à un procédé de régulation de l'injection de carburant dans un moteur thermique d'un groupe électrogène comprenant un alternateur entraîné par le moteur thermique, l'alternateur comportant un régulateur de tension, le moteur thermique comportant un régulateur de vitesse ayant une entrée pouvant recevoir une consigne de vitesse externe, le procédé comportant les étapes suivantes :

- détecter une variation de couple et d'énergie cinétique du groupe électrogène par des mesures électriques sur l'alternateur,
- exercer, en fonction de l'amplitude de la variation de couple relativement au niveau d'énergie cinétique, une action sur l'entrée de la consigne du régulateur de tension et/ou du régulateur de vitesse.

Grâce à l'invention, la connaissance du niveau de couple et d'énergie cinétique dès l'application d'une charge, et de la variation de couple ou d'énergie cinétique, permet d'appliquer instantanément une correction adéquate au groupe électrogène.

Cette correction est possible grâce à la communication d'informations entre le régulateur de tension et le régulateur de vitesse, permettant notamment une modification de la valeur de consigne de vitesse du régulateur de vitesse du moteur thermique. Les performances du groupe électrogène sont augmentées sans autre modification de ses caractéristiques, ce qui permet de mettre en oeuvre l'invention avec peu de modifications, voire sans modification du régulateur de vitesse du moteur thermique et donc d'appliquer l'invention à des moteurs existants.

Le régulateur de vitesse peut être réalisé sous la forme d'une ou plusieurs cartes électroniques, logées par exemple dans un ou plusieurs boîtiers propres au moteur thermique, et le régulateur de tension peut être réalisé sous la forme d'une ou plusieurs cartes électroniques, logées par exemple dans un ou plusieurs boîtiers propres à l'alternateur.

L'action exercée sur l'entrée de la consigne du régulateur de vitesse peut consister à modifier la valeur de consigne de vitesse du moteur thermique, en l'augmentant ou en la diminuant.

La régulation différenciée qui s'exerce grâce à l'invention s'effectue en fonction du niveau de couple et d'énergie cinétique, et de la variation de couple. L'amplitude de la variation de couple peut être déterminée par rapport à la mesure précédente du niveau du couple.

Ainsi, l'action peut être exercée seulement sur le régulateur de tension si l'amplitude de la variation de couple relativement au niveau d'énergie cinétique est inférieure à un seuil prédéfini.

L'action peut être exercée à la fois sur l'entrée du régulateur de vitesse et du régulateur de tension si l'amplitude de la variation de couple relativement au niveau d'énergie cinétique est supérieure à un seuil prédéfini.

Ces seuils prédéfinis dépendent avantageusement des caractéristiques du moteur thermique et de celles de l'alternateur.

Les actions à exercer sur le régulateur de tension et/ou le régulateur de vitesse en fonction de la variation de couple et de l'énergie cinétique peuvent être déterminées par une loi de commande prédéfinie, par exemple préenregistrée dans une table, ou calculée en temps réel.

La loi de commande peut être telle que définie dans le tableau ci-dessous :

| | $\Delta_l$ | $\Delta_i$ | $\Delta_n$ |
|---|---|---|---|
| $E_l$ | $A_{l,l}$ | $A_{i,l}$ | $A_{n,l}$ |
| $E_j$ | $A_{l,j}$ | $A_{i,j}$ | $A_{n,j}$ |
| $E_n$ | $A_{l,n}$ | $A_{i,n}$ | $A_{n,n}$ |

où $E_j$ représente un niveau d'énergie cinétique, $E_l < ... < E_j < ... < E_n$, $\Delta_i$ la variation de couple, $\Delta_1 < ... < \Delta_j < ... < \Delta_n$, et $A_{i,j}$ l'action à exercer sur le régulateur de vitesse et/ou le régulateur de tension.

Ainsi, selon l'amplitude de la variation de couple $\Delta_i$ et le niveau $E_j$ de l'énergie cinétique, une action particulière $A_{i,j}$ a lieu. Cette action $A_{i,j}$ peut consister dans certains cas à ne pas agir sur les régulateurs de tension et de vitesse, qui dans ce cas conservent un fonctionnement autonome en régulant respectivement la tension et la vitesse indépendamment l'un de l'autre, ou dans d'autres cas à une action exercée uniquement sur le régulateur de tension, par exemple pour changer une consigne de tension ou à une action exercée à la fois sur le régulateur de tension et sur le régulateur de vitesse, par exemple pour changer à la fois une consigne de vitesse et une consigne de tension.

La valeur de consigne de vitesse du moteur thermique peut être transmise à l'entrée du régulateur de vitesse du moteur thermique *via* un bus de transport d'informations, notamment par une liaison série ou un signal analogique. Le bus peut être relié à une interface de contrôle du groupe électrogène, par exemple disposée dans une armoire disposée devant ou sur le côté du groupe. Le régulateur de tension peut aussi être relié par le bus précité au régulateur de vitesse, ou transmettre autrement l'information de changement de vitesse de consigne au régulateur de vitesse.

L'entrée du régulateur de vitesse recevant la consigne de vitesse peut être analogique ou numérique ou par communication.

Le régulateur de tension de l'alternateur peut observer à tout moment les niveaux de couple et d'énergie cinétique du moteur et déterminer très rapidement la valeur de consigne de vitesse à appliquer. Dans l'invention, la régulation de tension se fait ainsi en ayant connaissance du niveau de couple et d'énergie cinétique et de leur variation.

La détection d'une variation de la charge grâce à l'observation du niveau de couple et d'énergie cinétique via l'observation de grandeurs électriques permet une anticipation de la chute de vitesse du moteur et de mettre en oeuvre des actions pour limiter cette chute de manière efficace.

La puissance électrique en sortie de l'alternateur, permettant de déterminer le niveau de couple appliqué au moteur thermique, peut être déterminée à l'aide d'un capteur de courant mesurant le courant parcourant l'enroulement d'induit principal de l'alternateur et d'une connaissance de la tension en sortie de l'alternateur. La puissance électrique peut être calculée avec des grandeurs électriques habituellement connues d'un régulateur de tension.

La transmission d'informations entre le régulateur de tension et le régulateur de vitesse peut être unidirectionnelle, uniquement du régulateur de tension vers le régulateur de vitesse.

Lors du calcul de la consigne de vitesse, connaître le niveau de couple et d'énergie cinétique du groupe électrogène est utile, l'état du moteur avant la variation de la charge influant sur son comportement lors de la variation de la charge, par exemple sur la pression d'admission.

L'action sur le régulateur de tension peut comprendre la modification de la valeur du courant dans la roue polaire, de manière à amener temporairement la tension de sortie de l'alternateur à une valeur inférieure à celle avant détection de la variation de couple et d'énergie cinétique, en vue de diminuer le niveau de couple demandé au moteur thermique, de préférence avant que le moteur n'ait chuté en vitesse.

Le courant dans la roue polaire est ainsi diminué de façon adéquate même en cas de faible charge appliquée et le couple du moteur est réduit de manière appropriée pendant la durée nécessaire à l'augmentation de la puissance mécanique du moteur.

Pour agir sur le courant dans la roue polaire, il est possible d'agir sur le courant d'excitation de l'excitatrice lorsque l'alternateur comporte une excitatrice ayant un stator bobiné. La modification du courant dans la roue polaire peut s'effectuer par exemple en diminuant le courant d'excitation de l'excitatrice.

Notamment dans le cas d'un alternateur comportant une excitatrice dont le stator comporte des aimants permanents, il est possible d'agir sur le courant dans la roue polaire en disposant sur le rotor un système de commutation permettant de moduler le courant dans la roue polaire.

Dans une telle variante, l'alternateur peut comporter, au rotor, un contrôleur commandant le système de commutation. Un système de transmission, par exemple sans fil, peut communiquer avec le régulateur de tension situé au stator de l'alternateur.

Le contrôleur peut commander le système de commutation de façon à réguler la tension de sortie de l'alternateur, par exemple par une modulation de largeur d'impulsion de la tension aux bornes de la roue polaire. Le régulateur peut faire varier le rapport cyclique de la modulation de largeur d'impulsion en fonction de la tension recherchée en sortie de l'alternateur. Une telle variante permet d'améliorer le temps de réponse du groupe électrogène lorsque la charge varie.

La sortie de l'alternateur peut être reliée à un réseau triphasé, la vitesse nominale de rotation du moteur thermique étant par exemple de 1500 tr/min, la fréquence nominale étant par exemple égale à 50 Hz, et la tension nominale de sortie entre phases de l'alternateur étant par exemple de 400V.

L'invention a encore pour objet, selon un autre de ses aspects, un groupe électrogène comportant un moteur thermique et un alternateur entraîné par le moteur thermique, adapté à mettre en oeuvre le procédé selon l'invention, tel que défini ci-dessus.

Le groupe peut comporter un bus permettant l'échange d'informations entre le régulateur de tension et une interface utilisateur, laquelle peut se présenter par exemple sous la forme d'une armoire de contrôle située en un emplacement différent du régulateur de tension. L'échange des informations sur le bus s'effectue par exemple par un protocole de transmission série, par exemple CAN ou autre.

Le groupe est équipé d'un système de régulation qui assure que la variation de données électriques en sortie de l'alternateur soit exploitée au mieux pour maintenir le moteur thermique dans une plage de fonctionnement adaptée. Ce système de régulation met en oeuvre le procédé défini plus haut.

Toutes les caractéristiques de l'invention énumérées ci-dessus pour le procédé valent ainsi pour le groupe électrogène.

Le système de régulation peut comporter un calculateur, notamment au niveau du régulateur de tension, qui détermine la variation de couple et d'énergie cinétique et, en fonction de l'amplitude de la variation de couple relativement au niveau d'énergie cinétique, exerce une action sur une entrée du régulateur de tension et/ou du régulateur de vitesse. Cela permet de diminuer le niveau de couple demandé au moteur thermique et/ou d'augmenter le régime de celui-ci, de préférence avant que le moteur n'ait ralenti. Ce système de régulation peut être intégré au régulateur de tension.

L'invention pourra être mieux comprise à la lecture de la description détaillée qui va suivre, d'exemples non limitatifs de mise en oeuvre de celle-ci, et à l'examen du dessin annexé, sur lequel :

- la figure 1 représente un groupe électrogène selon l'art antérieur,
- la figure 2 représente un groupe électrogène selon l'invention,
- la figure 3 est un schéma en blocs illustrant un procédé selon l'invention,
- la figure 4 illustre différentes plages de fonctionnement en fonction du niveau d'énergie cinétique et de la variation de couple,
- la figure 5 représente, isolément, un alternateur et un régulateur de tension selon l'invention, et
- les figures 6 et 7 représentent une variante d'alternateur selon l'invention.

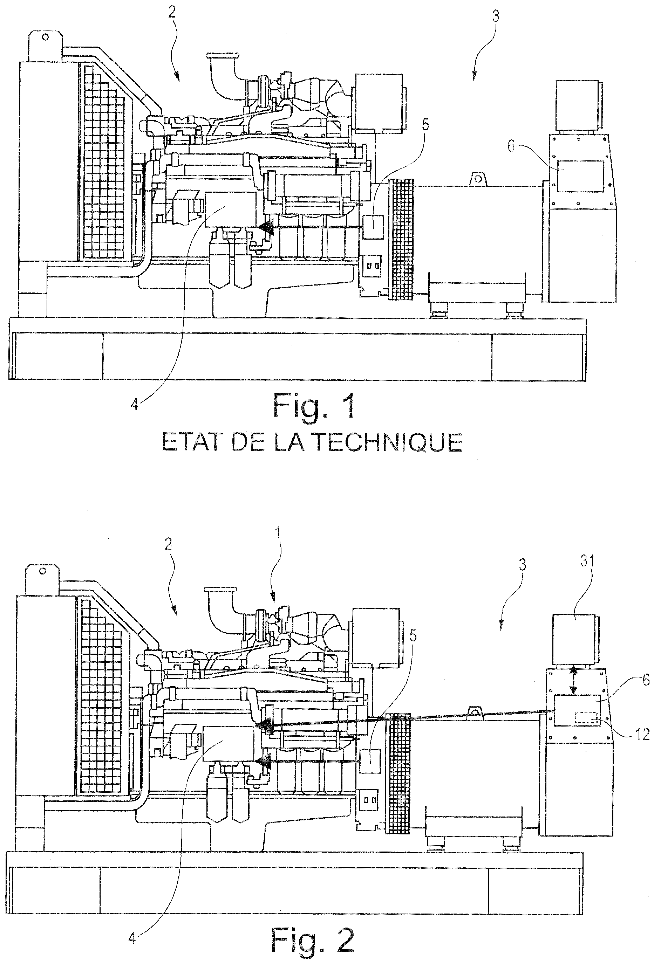

Un groupe électrogène selon l'art antérieur comporte, comme illustré à la figure 1, un moteur thermique 2 et un alternateur 3, auquel une charge est appliquée.

Le moteur 2 comporte un régulateur de vitesse 4 qui est par exemple connu en lui-même, comportant un calculateur d'injection qui calcule l'injection (ou la commande des gaz) du moteur afin que la vitesse de rotation $w$ soit maintenue constante autant que possible à une valeur nominale $w_n$ qui dépend de la polarité de l'alternateur et de la fréquence du courant de sortie recherchée, par exemple 1500 tr/min pour une fréquence de 50 Hz.

Le moteur 2 comporte un capteur 5 de vitesse pouvant être, par exemple, inductif, capacitif ou optique. Le capteur 5 est par exemple disposé devant une couronne dentée entraînée en rotation par le moteur, et délivre des impulsions à une fréquence proportionnelle à la vitesse de rotation $w$.

Le régulateur de vitesse 4 reçoit le signal du capteur 5 et calcule le niveau d'injection de carburant adéquat pour maintenir la vitesse.

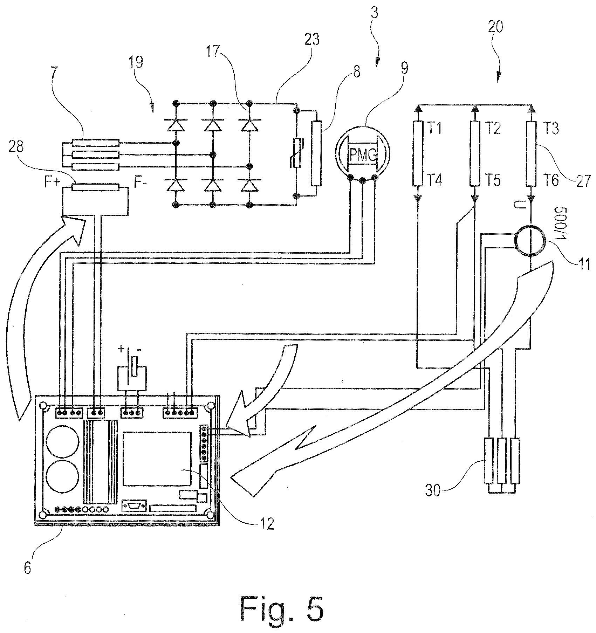

Le rotor 19 d'un alternateur 3 selon l'invention peut comporter, comme illustré à la figure 5, un redresseur 17 composé d'un pont de diodes double alternance, alimentant à partir de l'induit d'excitatrice 7 un bus continu 23.

L'alternateur 3 peut comporter au stator 20 un inducteur d'excitatrice 28, et l'enroulement d'induit principal 27 est relié à une charge 30, représentée schématiquement.

La sortie d'un alternateur 3 selon l'invention alimente par exemple un réseau triphasé, la vitesse $w_n$ nominale de rotation du moteur thermique 2 étant par exemple de 1500 tr/min, la fréquence nominale $F_n$ étant égale par exemple à 50 Hz, et la tension nominale $U_n$ de sortie entre phases de l'alternateur étant par exemple de 400V.

Le moteur thermique 2 est avantageusement un moteur turbocompressé, mais l'invention n'est pas limitée à un type de moteur thermique particulier.

Le régulateur de vitesse 4 comporte une entrée pouvant recevoir une consigne de vitesse externe. L'invention n'est pas limitée à un type particulier d'entrée, celle-ci pouvant être numérique ou analogique ou par communication.

L'alternateur 3 comporte, comme illustré à la figure 2, un régulateur de tension 6 qui comporte un système de régulation agencé pour détecter une variation de la charge, à partir d'une détection d'une variation du couple et/ou d'énergie cinétique du moteur thermique 2. Le régulateur de tension 6 peut être un régulateur numérique, mais l'invention n'est pas limitée à un type de régulateur de tension particulier.

Le groupe électrogène 1 peut comporter, comme dans l'exemple décrit, une interface utilisateur 31 qui communique avec le régulateur de tension 6 et le régulateur de vitesse 4, par exemple par l'intermédiaire d'un bus d'échange d'informations, par exemple par un protocole de liaison CAN, Mod Bus, CAN open, J1939, propriétaire, ou autre. Ainsi, le régulateur de tension 6 peut transmettre des informations au régulateur de vitesse 4, et notamment changer la valeur de consigne de vitesse.

L'interface utilisateur 31 peut comporter un écran de contrôle, par exemple un analyseur de réseau ou un superviseur d'installation. L'interface utilisateur 31 peut effectuer par exemple la lecture et l'affichage des valeurs de tension, courant, puissance et température de l'alternateur 3. L'interface 31 peut permettre de régler la tension, le facteur de puissance, l'unité de puissance, le point de fonctionnement manuel, ou encore les gains de chaque boucle de régulation, et les paramètres de l'aide à l'optimisation des réponses en régime transitoire, le cas échéant.

L'interface utilisateur 31 permet également de régler des paramètres de limitation, diverses options, et des paramètres dépendant du type d'alternateur utilisé.

Le régulateur de tension 6 peut être alimenté par un générateur à aimants permanents 9 ou par tout autre moyen.

Le régulateur de tension 6 comporte un calculateur 12, par exemple à microprocesseur, représenté à la figure 5, qui détermine le courant à appliquer dans la roue polaire 8 pour maintenir l'amplitude de la tension à une valeur de consigne qui par défaut est la tension nominale $U_n$.

La modification du courant dans la roue polaire 8 s'effectue notamment en diminuant le courant d'excitation de l'excitatrice, le régulateur de tension 6 agissant de façon conventionnelle sur ce courant.

Dans une variante, la modification du courant dans la roue polaire 8 s'effectue grâce à une modulation de largeur d'impulsion de la tension aux bornes de la roue polaire.

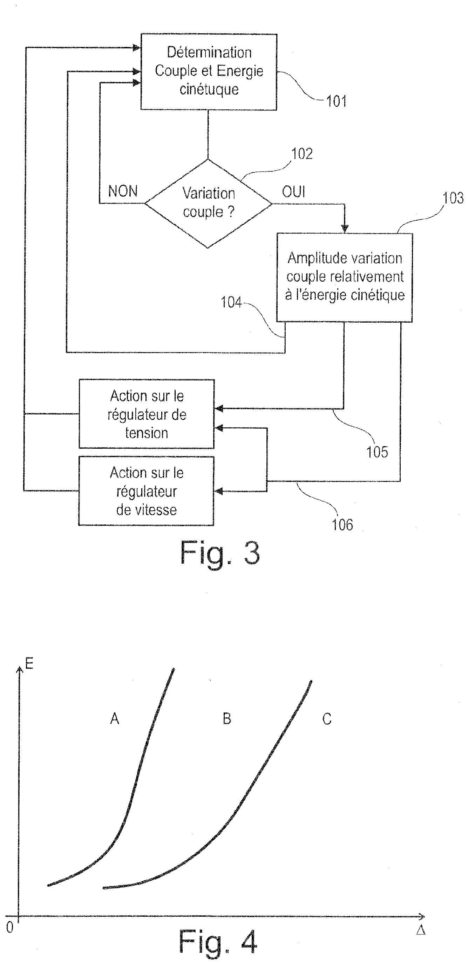

Le régulateur de tension 6 calcule, lors d'une étape 101 représentée à la figure 3, les niveaux de couple et d'énergie cinétique. Ces niveaux sont calculés grâce à des informations concernant les grandeurs électriques en sortie de l'alternateur 3, par exemple à partir de la tension $U$ entre phases en sortie de l'alternateur et du courant parcourant l'enroulement d'induit principal 27 du stator 20, ce courant étant déterminé grâce à un capteur de courant 11 représenté à la figure 5.

Au cours du fonctionnement du groupe électrogène, on examine si la valeur de couple a changé, ce qui correspond à l'étape 102 du schéma de la figure 3. Le cas échéant, on évalue l'amplitude de la variation de couple relativement au niveau d'énergie cinétique, à une étape 103, afin de déterminer si une action doit être exercée sur l'entrée du régulateur de vitesse et/ou du régulateur de tension.

Si la variation de couple est faible, ou si le niveau d'énergie cinétique est suffisamment élevé, aucune action n'est exercée. Le régulateur de tension 6 calcule alors à nouveau les niveaux de couple et d'énergie cinétique, comme indiqué en 104 sur la figure 3.

Si l'amplitude de la variation de couple relativement au niveau d'énergie cinétique est inférieure à un seuil prédéfini, seule une action sur le régulateur de tension 6 est exercée, lors d'une étape 105.

Enfin, si l'amplitude de la variation de couple relativement au niveau d'énergie cinétique est supérieure au seuil prédéfini, une action est exercée à la fois sur l'entrée du régulateur de vitesse 4 et sur le régulateur de tension 6, lors d'une étape 106.

Le seuil prédéfini dépend des caractéristiques du moteur thermique 2 et de celles de l'alternateur 3.

Différentes actions qui dépendent de l'amplitude de la variation de couple $\Delta$ relativement au niveau d'énergie cinétique $E$ sont illustrées à la figure 4. Le domaine A correspond à une variation de couple $\Delta$ assez faible, et quel que soit le niveau d'énergie cinétique $E$, aucune action ne sera exercée. Le domaine B correspond à une variation de couple $\Delta$ moyenne, et une action sera exercé sur le régulateur de tension 6 seulement. Le domaine C correspond à une variation de couple $\Delta$ élevée, et quel que soit le niveau d'énergie cinétique $E$, une action sera exercée à la fois sur l'entrée du régulateur de vitesse 4 et sur le régulateur de tension 6.

En cas d'augmentation de la charge, l'action sur le régulateur de tension 6 comprend la modification de la valeur du courant dans la roue polaire 8, de manière à amener temporairement la tension $U$ de sortie de l'alternateur 3 à une valeur inférieure à celle avant détection de la variation de couple et d'énergie cinétique, en vue de diminuer le niveau de couple demandé au moteur thermique 2.

Une fois que la puissance du moteur a augmenté et que la vitesse de rotation w augmente, la valeur du courant dans la roue polaire 8 peut à nouveau être modifiée, de manière à ramener la valeur de la tension $U$ de sortie à celle avant la variation de couple, jusqu'à un point de fonctionnement nominal.

L'invention n'est pas limitée à l'exemple qui vient d'être décrit en référence aux figures 2 à 5.

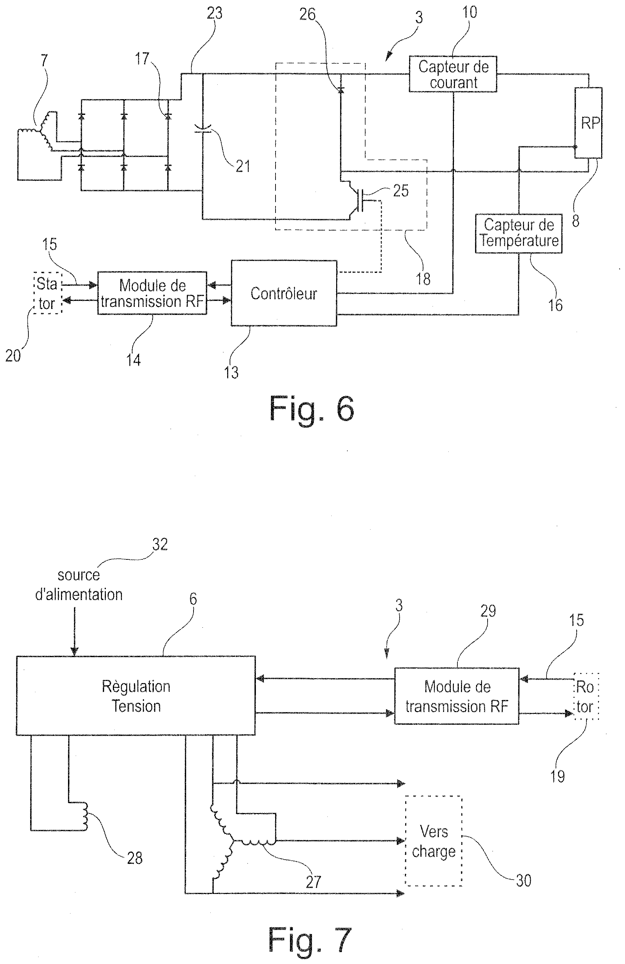

Dans la variante représentée aux figures 6 et 7, le rotor 19 comporte un système de communication embarqué, et le bus continu 23 est relié à un système de commutation 18. Un condensateur de filtrage 21 peut être prévu.

Le système de commutation 18 peut être composé, par exemple, comme illustré d'une diode de roue libre 26 et d'un composant électronique commutable 25, tel qu'un transistor IGBT.

Un contrôleur 13 commande le système de commutation 18 de façon à réguler, lorsque nécessaire, par modulation de largeur d'impulsion, la tension dans la roue polaire 8. Le rapport cyclique $\beta$ de la modulation de largeur d'impulsion est fonction entre autres de la tension de sortie de la machine principale, de façon à maintenir autant que possible la tension délivrée par l'alternateur 3 à la valeur souhaitée.

Le rotor 19 comporte dans l'exemple illustré un capteur de courant 10 pour mesurer le courant dans la roue polaire 8. La valeur du courant ainsi mesurée est transmise au contrôleur 13.

Le régulateur de tension 6 au stator 20 est alimenté par une alimentation 32, et l'inducteur d'excitatrice 28 est bobiné, dans l'exemple décrit. Un système de communication sans fil HF est disposé entre le contrôleur 13 du rotor 19 et le régulateur de tension 6 du stator 20 de l'alternateur 3. Le système de communication sans fil est composé d'un module de transmission 14 disposé au rotor 19, d'un module de transmission 29 disposé au stator 20, et de voies de transmission sans fil 15 reliant lesdits modules.

La valeur du courant dans la roue polaire 8, mesurée par le capteur de courant 10 du rotor 19, est transmise au régulateur de tension 6 du stator 20 par le système de communication sans fil 14, 15, 29.

## Revendications

1. Procédé de régulation de l'injection de carburant dans un moteur thermique (2) d'un groupe électrogène (1) comprenant un alternateur (3) entraîné par le moteur thermique, l'alternateur comportant un régulateur de tension (6), le moteur thermique comportant un régulateur de vitesse (4) comportant un calculateur d'injection qui calcule l'injection de carburant et ayant une entrée pouvant recevoir une consigne de vitesse externe, le procédé comportant les étapes suivantes :

    - détecter une variation de couple et d'énergie cinétique par des mesures électriques sur l'alternateur (3),
    - exercer, en fonction de l'amplitude de la variation de couple relativement au niveau d'énergie cinétique, une action sur l'entrée de la consigne du régulateur de tension (6) et/ou du régulateur de vitesse (4).

2. Procédé selon la revendication 1, l'action exercée sur l'entrée du régulateur de vitesse (4) consistant à modifier la valeur de consigne de vitesse du moteur thermique (2).

3. Procédé selon la revendication 1 ou 2, l'action étant exercée seulement sur le régulateur de tension (6) si l'amplitude de la variation de couple relativement au niveau d'énergie cinétique est inférieure à un seuil prédéfini.

4. Procédé selon la revendication 1 ou 2, l'action étant exercée à la fois sur l'entrée du régulateur de vitesse (4) et sur le régulateur de tension (6) si l'amplitude de la variation de couple relativement au niveau d'énergie cinétique est supérieure à un seuil prédéfini.

5. Procédé selon l'une quelconque des revendications précédentes, la valeur de consigne de vitesse du moteur thermique (2) étant transmise par le régulateur de tension (6) au régulateur de vitesse (4) *via* un bus, notamment par une liaison série ou un signal analogique.

6. Procédé selon l'une quelconque des revendications précédentes, l'action sur le régulateur de tension (6) comprenant la modification de la valeur du courant dans la roue polaire (8), de manière à amener temporairement la tension (*U*) de sortie de l'alternateur (3) à une valeur inférieure à celle avant détection de la variation de couple et d'énergie cinétique, en vue de diminuer le niveau de couple demandé au moteur thermique (2).

7. Procédé selon la revendication précédente, la modification du courant dans la roue polaire (8) s'effectuant en diminuant le courant d'excitation de l'excitatrice.

8. Procédé selon la revendication 6, la modification du courant dans la roue polaire (8) s'effectuant grâce à une modulation de largeur d'impulsion de la tension aux bornes de la roue polaire.

9. Procédé selon l'une quelconque des revendications précédentes, le moteur thermique (2) étant un moteur turbocompressé.

10. Groupe électrogène (1) comportant un moteur thermique (2) et un alternateur (3) entrainé par le moteur thermique, le groupe électrogène étant adapté à mettre en oeuvre le procédé de régulation de l'injection de carburant tel que défini dans l'une quelconque des revendications précédentes.

11. Système de régulation de l'injection de carburant dans un moteur thermique (2) d'un groupe électrogène (1) comprenant un alternateur (3) entraîné par le moteur thermique, l'alternateur comportant un rotor ayant une roue polaire (8) et un régulateur de tension (6), le moteur thermique (2) comportant un régulateur de vitesse (4) comportant un calculateur d'injection qui calcule l'injection de carburant et ayant une entrée pouvant recevoir une consigne de vitesse externe et un capteur de vitesse (5), le système étant configuré pour détecter une variation de couple et d'énergie cinétique par des mesures électriques sur l'alternateur (3), et exercer, en fonction de l'amplitude de la variation de couple relativement au niveau d'énergie cinétique, une action sur l'entrée de la consigne du régulateur de tension (6) et/ou du régulateur de vitesse (4) visant à diminuer le couple demandé au moteur thermique (2) et/ou à augmenter le régime de celui-ci.

12. Système selon la revendication précédente, comportant un contrôleur (13) tournant avec le rotor (19) et permettant de commander le courant dans la roue polaire (8) par une modulation de largeur d'impulsion de la tension aux bornes de la roue polaire.

**Patentansprüche**

1. Verfahren zur Regelung der Kraftstoffeinspritzung in einen Verbrennungsmotor (2) eines Generatorsatzes (1), umfassend einen durch den Verbrennungsmotor angetriebenen Wechselstromgenerator (3), wobei der Wechselstromgenerator einen Spannungsregler (6) umfasst, wobei der Verbrennungsmotor einen Geschwindigkeitsregler (4) umfasst, der einen Einspritzrechner umfasst, der die Kraftstoffeinspritzung berechnet und einen Eingang aufweist, der einen externen Geschwindigkeitssollwert empfangen kann, wobei das Verfahren die folgenden Schritte umfasst:

    - Detektieren einer Veränderung des Drehmoments und der kinetischen Energie durch elektrische Messungen am Wechselstromgenerator (3),
    - in Abhängigkeit von der Amplitude der Veränderung des Drehmoments im Verhältnis zum kinetischen Energieniveau, Ausführen einer Handlung am Sollwerteingang des Spannungsreglers (6) und/oder des Geschwindigkeitsreglers (4).

2. Verfahren nach Anspruch 1, wobei die am Eingang des Geschwindigkeitsreglers (4) ausgeführte Handlung darin besteht, den Geschwindigkeitssollwert des Verbrennungsmotors (2) zu ändern.

3. Verfahren nach Anspruch 1 oder 2, wobei die Handlung nur am Spannungsregler (6) ausgeführt wird, wenn die Amplitude der Veränderung des Drehmoments im Verhältnis zum kinetischen Energieniveau unter einem vordefinierten Schwellenwert liegt.

4. Verfahren nach Anspruch 1 oder 2, wobei die Handlung gleichzeitig am Eingang des Geschwindigkeitsreglers (4) und am Spannungsregler (6) ausgeführt wird, wenn die Amplitude der Veränderung des Drehmoments im Verhältnis zum kinetischen Energieniveau über einem vordefinierten Schwellenwert liegt.

5. Verfahren nach einem der vorangehenden Ansprüche, wobei der Geschwindigkeitssollwert des Verbrennungsmotors (2) durch den Spannungsregler (6) über einen Bus, insbesondere durch eine serielle Verbindung oder ein analoges Signal, an den Geschwindigkeitsregler (4) übertragen wird.

6. Verfahren nach einem der vorangehenden Ansprüche, wobei die Handlung am Spannungsregler (6) die Änderung des Stromwerts im Polrad (8) umfasst, sodass zeitweise die Ausgangsspannung (U) des Wechselstromgenerators (3) auf einen Wert gebracht wird, der kleiner als der vor der Detektion der Änderung des Drehmoments und der kinetischen Energie ist, um das geforderte Drehmomentniveau an dem Verbrennungsmotor (2) zu verringern.

7. Verfahren nach dem vorangehenden Anspruch, wobei die Änderung des Stroms im Polrad (8) erfolgt, indem der Erregerstrom des Erregers verringert wird.

8. Verfahren nach Anspruch 6, wobei die Änderung des Stroms im Polrad (8) dank einer Pulsweitenmodulation der Spannung an den Anschlüssen des Polrads erfolgt.

9. Verfahren nach einem der vorangehenden Ansprüche, wobei der Verbrennungsmotor (2) ein aufgeladener Verbrennungsmotor ist.

10. Generatorsatz (1), umfassend einen Verbrennungsmotor (2) und einen durch den Verbrennungsmotor angetriebenen Wechselstromgenerator (3), wobei der Generatorsatz dazu angepasst ist, das Verfahren zur Regelung der Kraftstoffeinspritzung, wie es in einem jeglichen der vorangehenden Ansprüche definiert ist, auszuführen.

11. System zur Regelung der Kraftstoffeinspritzung in einen Verbrennungsmotor (2) eines Generatorsatzes (1), umfassend einen durch den Verbrennungsmotor angetriebenen Wechselstromgenerator (3), wobei der Wechselstromgenerator einen Rotor mit einem Polrad (8) und einen Spannungsregler (6) umfasst, wobei der Verbrennungsmotor (2) einen Geschwindigkeitsregler (4) umfasst, der einen Einspritzrechner umfasst, der die Kraftstoffeinspritzung berechnet und einen Eingang, der einen externen Geschwindigkeitssollwert empfangen kann, und einen Geschwindigkeitssensor (5) aufweist, wobei das System dazu gestaltet ist, eine Änderung des Drehmoments und der kinetischen Energie durch elektrische Messungen am Wechselstromgenerator (3) zu detektieren und in Abhängigkeit von der Amplitude der Änderung des Drehmoments im Verhältnis zum kinetischen Energieniveau eine Handlung am Sollwerteingang des Spannungsreglers (6) und/oder des Geschwindigkeitsreglers (4) auszuführen, um das geforderte Drehmoment an dem Verbrennungsmotor (2) zu verringern und/oder die Drehzahl derselben zu erhöhen.

12. System nach dem vorangehenden Anspruch, umfassend eine Steuerung (13), die sich mit dem Rotor (19) dreht und es ermöglicht, den Strom im Polrad (8) durch eine Pulsweitenmodulation der Spannung an den Anschlüssen des Polrads zu steuern.

**Claims**

1. A method for regulating the fuel injection in an engine (2) of an electric generating set (1) comprising an alternator (3) driven by the engine, the alternator comprising a voltage regulator (6), the engine comprising a speed regulator (4) comprising an injection computer computing the fuel injection and having an input able to receive an external speed setpoint, the method comprising the following steps:

   - detecting a variation of torque and of kinetic energy by electrical measurements on the alternator (3),
   - exerting, as a function of the amplitude of the torque variation relative to the kinetic energy level, an action on the input of the setpoint of the voltage regulator (6) and/or of the speed regulator (4).

2. The method as claimed in claim 1, the action exerted on the input of the speed regulator (4) consisting in modifying the speed setpoint value of the engine (2).

3. The method as claimed in claim 1 or 2, the action being exerted only on the voltage regulator (6) if the amplitude of the torque variation relative to the kinetic energy level is below a predefined threshold.

4. The method as claimed in claim 1 or 2, the action being exerted both on the input of the speed regulator (4) and on the voltage regulator (6) if the amplitude of the torque variation relative to the kinetic energy level is above a predefined threshold.

5. The method as claimed in any one of the preceding claims, the speed setpoint value of the engine (2) being transmitted by the voltage regulator (6) to the speed regulator (4) *via* a bus, in particular by a series link or an analog signal.

6. The method as claimed in any one of the preceding claims, the action on the voltage regulator (6) comprising the modification of the value of the current in the pole wheel (8), so as to temporarily bring the output voltage (*U*) of the alternator (3) to a value below that before detection of the variation of torque and of kinetic energy, with a view to decreasing the torque level demanded to the engine (2).

7. The method as claimed in the preceding claim, the modification of the current in the pole wheel (8) being performed by decreasing the excitation current of the exciter.

8. The method as claimed in claim 6, the modification of the current in the pole wheel (8) being performed by virtue of a pulse width modulation of the voltage across the terminals of the pole wheel.

9. The method as claimed in any one of the preceding claims, the engine (2) being a turbocharged engine.

10. An electric generating set (1) comprising an engine (2) and an alternator (3) driven by the engine, the electric generating set being suitable for implementing the method for regulating fuel injection such as defined in any one of the preceding claims.

11. A system for regulating the fuel injection in an engine (2) of an electric generating set (1) comprising an alternator (3) driven by the engine, the alternator comprising a rotor having a pole wheel (8) and a voltage regulator (6), the engine (2) comprising a speed regulator (4) comprising an injection computer computing the fuel injection and having an input able to receive an external speed setpoint and a speed sensor (5), the system being configured to detect a variation of torque and of kinetic energy by electrical measurements on the alternator (3), and exert, as a function of the amplitude of the torque variation relative to the kinetic energy level, an action on the input of the setpoint of the voltage regulator (6) and/or of the speed regulator (4) aimed at decreasing the torque demanded to the engine (2) and/or at increasing the speed of the latter.

12. The system as claimed in the preceding claim, comprising a controller (13) rotating with the rotor (19) and making it possible to control the current in the pole wheel (8) by a pulse width modulation of the voltage across the terminals of the pole wheel.

Fig. 1

ETAT DE LA TECHNIQUE

Fig. 2

**Fig. 3**

**Fig. 4**

Fig. 5

Fig. 6

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5703410 A
- EP 1938447 A
- US 20070228735 A
- DE 102004017087
- US 20100241283 A
- EP 2083498 A